# EUROPÄISCHE PATENTSCHRIFT

(11) **EP 3 247 598 B1**
(45) Veröffentlichungstag und Bekanntmachung des Hinweises auf die Patenterteilung: **21.11.2018**
(21) Anmeldenummer: 16701286.3
(22) Anmeldetag: 21.01.2016
(51) Int. Cl.: B60T 8/17, B60T 17/22, B60T 8/52, B60T 8/18

(54) **BREMSSYSTEM MIT MECHANISCHER KRAFTSCHLUSSBEGRENZUNG RAD-SCHIENE**
BRAKE SYSTEM WITH MECHANICAL WHEEL-RAIL ADHESION LIMITATION
SYSTÈME DE FREINAGE À LIMITATION MÉCANIQUE DE L'ADHÉRENCE ROUE-RAIL

(30) Priorität: 23.01.2015 DE 102015000898
(43) Veröffentlichungstag der Anmeldung: 29.11.2017
(73) Patentinhaber: KNORR-BREMSE Systeme für Schienenfahrzeuge GmbH, 80809 München (DE)
(72) Erfinder: GRUNWALD, Torsten, 82418 Seehausen am Staffelsee (DE); AURICH, Stefan, 86316 Friedberg (DE); ELSTORPFF, Marc-Gregory, 80638 München (DE); HERDEN, Marc-Oliver, München 81377 (DE)
(86) Internationale Anmeldenummer: PCT/EP2016/051195
(87) Internationale Veröffentlichungsnummer: WO 2016/116541

(56) Entgegenhaltungen:
- WO-A1-96/08398
- WO-A1-2008/031701
- DE-A1-102012 219 984
- US-A- 3 398 993

## Beschreibung

Die Erfindung bezieht sich auf ein Bremssystem für Schienenfahrzeuge mit mechanischer Begrenzung des Kraftschlusses zwischen Rad und Schiene.

### Stand der Technik

Alle Schienenfahrzeuge, die mit Scheibenbremsen oder Klotzbremseinheiten ausgerüstet werden oder die Bremskraft in sonstiger Weise auf das Rad ausüben, übertragen diese Bremskraft über den Radaufstandspunkt zur Schiene. Wesentliche Voraussetzung für die Zulassung eines Schienenfahrzeuges ist, dass dieses innerhalb eines vorgegebenen Bremswegs zum Stehen gebracht werden kann. Auf der anderen Seite ist jedoch vorgeschrieben, dass ein vorgegebener Maximalwert für die vom Rad auf die Schiene übertragene Bremskraft nicht überschritten werden darf. Man bezeichnet in der Fachsprache den Reibwert, der für die Kraftübertragung vom Rad auf die Schiene erforderlich ist, als Haftwertausnutzung. Der Grenzwert der Haftwertausnutzung, der bei der Übertragung der höchstzulässigen Bremskraft erreicht wird, wird als Kraftschlussgrenze bezeichnet.

Der für die Zulassung erforderliche Nachweis, dass die Kraftschlussgrenze unter allen denkbaren Umständen eingehalten wird, ist sehr aufwendig. Um ein Überschreiten sicher zu vermeiden, müssen alle Toleranzen und externen Einflüsse bei der Auslegung der Bremsanlage berücksichtigt werden. Für Schwankungen des Belagsreibwerts aufgrund von Temperatur oder Feuchtigkeit, des Bremszangenwirkungsgrades oder des Radreifendurchmessers im Zuge des Verschleißes sind entsprechende Sicherheitszuschläge vorzusehen. Dadurch wird der Tatsache Rechnung getragen, dass heutige Bremssysteme für die Sicherheitsbremsung (Notbremsung) aus Gründen der Ausfallsicherheit nicht geregelt, sondern nur gesteuert werden. In Ergebnis wird die im Rahmen der Vorschriften zulässige Bremsleistung häufig nicht optimal ausgenutzt.

Aus der DE 10 2011 006 002 A1 sowie aus DE 10 2012 219 984 A1 sind Bremsaktoren für Schienenfahrzeuge bekannt, die die ausgeübte Bremskraft aktiv auf einen Sollwert regeln und zu diesem Zweck als Rückkopplung einen Messwert für die tatsächlich wirkende Bremskraft erhalten. Nachteilig schützt dies noch nicht gegen eine Überschreitung der Kraftschlussgrenze. Außerdem ist es sehr aufwendig, die aktive elektronische Regelung mit der gesetzlich vorgeschriebenen Ausfallsicherheit zu realisieren. Aus der WO2008/031701 A1 ist ferner ein Bremssystem mit allen oberbegrifflichen Merkmalen bekannt.

### Aufgabe und Lösung

Es ist daher die Aufgabe der Erfindung, ein Bremssystem für ein Schienenfahrzeug zur Verfügung zu stellen, das eine Einhaltung der Kraftschlussgrenze garantiert und zugleich eine höhere Eigensicherheit aufweist als die Systeme nach dem bisherigen Stand der Technik.

Diese Aufgabe wird erfindungsgemäß gelöst durch ein Bremssystem gemäß Hauptanspruch. Weitere vorteilhafte Ausgestaltungen ergeben sich aus den darauf rückbezogenen Unteransprüchen.

### Gegenstand der Erfindung

Im Rahmen der Erfindung wurde ein Bremssystem für ein Schienenfahrzeug entwickelt. Dieses umfasst eine pneumatische oder hydraulische Druckmittelquelle sowie einen Bremsaktor zur Umwandlung eines eingesteuerten Drucks in eine auf mindestens ein Rad ausgeübte Bremskraft. Weiterhin ist ein Bremskraftgeber vorgesehen, der bei Ausübung der Bremskraft die korrespondierende Tangentialkraft erfährt.

Erfindungsgemäß erzeugt der Bremskraftgeber durch die Wirkung dieser Tangentialkraft eine Steuerkraft, einen Steuerweg oder einen pneumatischen oder hydraulischen Steuerdruck. In die Arbeitsleitung zwischen der Druckmittelquelle und dem Bremsaktor ist ein Regelventil geschaltet, das zusätzlich mit der Steuerkraft oder dem Steuerdruck beaufschlagt ist. Alternativ oder in Kombination kann das Regelventil auch mit einer aus der Steuerkraft abgeleiteten Rückkopplungskraft bzw. mit einem aus dem Steuerdruck abgeleiteten Rückkopplungsdruck beaufschlagt sein.

Das Regelventil ändert die Druckbeaufschlagung des Bremsaktors dahingehend, dass die Steuerkraft bzw. der Steuerdruck unter einem festgelegten Grenzwert gehalten wird. Alternativ oder in Kombination wird die Rückkopplungskraft bzw. der Rückkopplungsdruck unter einem festgelegten Grenzwert gehalten. Der jeweilige Grenzwert entspricht einer vollen Ausnutzung der Kraftschlussgrenze am Radaufstandspunkt.

Es wurde erkannt, dass auf diese Weise die meisten Unsicherheiten in der Übertragungsfunktion zwischen dem Druck im Bremsaktor und der ausgeübten Bremskraft eliminiert werden können, so dass garantiert werden kann, dass die Kraftschlussgrenze nicht überschritten wird. Insbesondere müssen keine Schwankungen im Wirkungsgrad des Bremsaktors berücksichtigt werden. Ist der Bremsaktor beispielsweise eine Bremszange, können sowohl der Wirkungsgrad des in ihr enthaltenen Druckzylinders als auch der Wirkungsgrad der Kraftübertragung von diesem Druckzylinder auf die Bremsbacken schwanken.

Als Einflussfaktoren, die noch zu berücksichtigen sind, verbleiben nur der Reibwert zwischen dem Bremsbelag und dem Rad bzw. einer daran angeordneten Bremsscheibe sowie der Radreifendurchmesser

Für den Belagreibwert kann problemlos ein maximaler Wert angegeben werden, der sich unter idealen Bedingungen einstellt; ausgehend von diesem idealen Reibwert kann der reale Wert durch äußere Einflüsse nur vermindert werden.

Das beim Bremsen ausgeübte Drehmoment muss als Kraft auf die Schiene übertragen werden, wobei diese Kraft im Abstand des Radradius von der Rotationsachse des Rades angreift. Je geringer der Radradius durch Verschleiß geworden ist, desto größer ist der erforderliche Kraftschluss zwischen Rad und Schiene, um ein gegebenes Drehmoment zu erzielen. Da jedoch für den Radradius eine untere Grenze (Verschleißgrenze) bekannt ist, kann der Grenzwert für den Steuerdruck bzw. für die Steuerkraft auf den ungünstigsten Fall eines bis an die Verschleißgrenze abgefahrenen Rades ausgelegt werden. Alternativ kann eine Raddurchmesserkompensation auf den aktuellen Raddurchmesser erfolgen.

Die Einhaltung der Kraftschlussgrenze muss nun nicht mehr in aufwendigen Versuchen vor der Zulassung des Schienenfahrzeugs, die im Übrigen nicht jede denkbare Fahrsituation abbilden können, vorab ermittelt werden. Sie wird stattdessen in jeder Fahrsituation aufs Neue aktiv garantiert: nähert sich die Steuerkraft bzw. der Steuerdruck der festgelegten Grenze, was mit einer Annäherung an die Kraftschlussgrenze gleichbedeutend ist, wird der in den Bremsaktor eingesteuerte Bremsdruck durch das Regelventil entsprechend vermindert. Werden entsprechende Bauteile verwendet und fachgerecht verarbeitet, gilt der mechanische Regelkreis als hinreichend sicher. Eine elektrische oder elektronische Regelung mit dem gleichen Sicherheitsniveau zu realisieren ist ungleich schwieriger.

Durch die aktive mechanische Überwachung der Kraftschlussgrenze wird weiterhin der Verkehr von Waggons zwischen Staaten, in denen unterschiedliche Kraftschlussgrenzen vorgeschrieben sind, wesentlich erleichtert. Der Waggon muss nicht vorab eine Prüfung bestehen, sondern es muss lediglich beim Grenzübertritt ein neuer Grenzwert für die Steuerkraft bzw. den Steuerdruck am Regelventil eingestellt werden.

Häufig ist nicht ein einziger Wert für die Kraftschlussgrenze vorgeschrieben, sondern es liegt eine Tabelle oder Funktionsvorschrift vor, die die Kraftschlussgrenze z.B. in Abhängigkeit von der Achslast und/oder der Geschwindigkeit angibt. Daher ist in einer besonders vorteilhaften Ausgestaltung der Erfindung ein zusätzlicher Achslastgeber vorgesehen, der die aktuelle Achslast an der Achse, auf die das Bremssystem wirkt, in eine Lastkraft oder einen pneumatischen oder hydraulischen Lastdruck umwandelt. Es ist ein Lastdruckventil vorgesehen, das zwischen den Bremskraftgeber und das Regelventil geschaltet werden kann oder direkt auf das Regelventil wirkt, so dass es die Steuerkraft bzw. den Steuerdruck nach Maßgabe der Lastkraft bzw. des Lastdrucks zu einer Rückkopplungskraft bzw. einem Rückkopplungsdruck ändert. Auch diese Änderung geschieht bevorzugt rein mechanisch ohne elektrische oder elektronische Komponenten. Das Regelventil ist nun mit der Rückkopplungskraft bzw. dem Rückkopplungsdruck, an Stelle der Steuerkraft bzw. des Steuerdrucks oder in Kombination hierzu, beaufschlagt. Weitere Abhängigkeiten wie die hier beispielhaft aufgeführte können in ähnlicher Weise berücksichtigt werden (z.B. Geschwindigkeitssignale etc.).

Vorteilhaft ist mindestens ein Sensor zur Umwandlung der Bremskraft oder der Achslast in ein elektrisches Signal vorgesehen. Dieses kann für eine Fahrdynamikregelung und andere Aufgaben verwendet werden. Zu diesem Zweck kann der Sensor beispielsweise den Steuerdruck oder die Steuerkraft in ein elektrisches Signal für die Bremskraft umwandeln, und/oder er kann dem Lastdruck oder die Lastkraft in ein elektrisches Signal für die Achslast umwandeln. Dann wird im Bereich des Rades kein zusätzlicher Einbauraum benötigt, sondern der Sensor kann an einem beliebigen Ort entlang der vom jeweiligen Geber ausgehenden Druck- oder Kraftverbindung platziert werden.

In einer besonders vorteilhaften Ausgestaltung der Erfindung erfährt mindestens ein Bremskraftgeber die Kraft, die auf den Träger für den Bremsbelag in tangentialer Richtung des Radlaufs wirkt. Dies ist genau die korrespondierende Kraft, die als Bremskraft auf das Rad wirkt und ein Verzögerungsmoment erzeugt. Schwankt der Reibwert des Bremsbelags, ändert sich diese Kraft. Damit werden Schwankungen im Reibwert durch die aktive mechanische Grenzwertüberwachung automatisch berücksichtigt. Sie müssen nicht mehr bei Auslegung der Bremsanlagen berücksichtigt werden. Der maximal erlaubte Kraftschluss kann damit besser ausgenutzt werden.

Alternativ oder in Kombination hierzu erfährt mindestens ein Bremskraftgeber die Anpresskraft des Bremsbelags gegen das gebremste Rad. Diese Kraft ist mechanisch einfacher zu erfassen als die in tangentialer Richtung des Radlaufs wirkende Kraft. Dafür wird sie noch durch den Reibwert des Bremsbelags an das Rad vermittelt. Die Bremsanlage ist dann auf den Maximalwert dieses Reibwerts unter idealen Bedingungen auszulegen.

Werden sowohl die tangentiale Kraft als auch die Anpresskraft gleichzeitig gemessen, steht unmittelbar auch ein Messwert für den Reibwert des Bremsbelags zur Verfügung. Dieser kann beispielsweise zur Überwachung des Bremsbelags auf Verschleiß oder Beschädigung genutzt werden.

### Spezieller Beschreibungsteil

Nachfolgend wird der Gegenstand der Erfindung anhand einer Figur näher erläutert, ohne dass der Gegenstand der Erfindung hierdurch beschränkt wird. Es ist gezeigt:

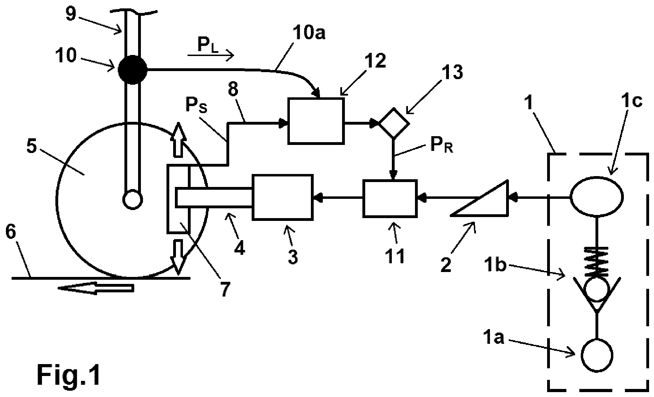

Figur 1 Skizze des erfindungsgemäßen Bremssystems.

Figur 1 zeigt eine Prinzipskizze des erfindungsgemäßen Bremssystems. Dieses Bremssystem hat eine Druckmittelquelle 1 die einen Kompressor 1a enthält. Über ein Rückschlagventil 1b befüllt dieser Kompressor einen Vorratsluftbehälter 1c. Über ein Führerbremsventil 2 wird die den Vorratsbehälter 1c zwecks Bremsung entnommene Druckluft dosiert. Die Druckluft wird in einen Druckzylinder in einem Bremsaktor 3 eingeleitet, der hier als Bremszange ausgebildet ist. Durch die Bremszange 3 werden die zwei Bremsbacken 4 zusammendrückt, wenn der Druckzylinder in der Bremszange 3 mit Druck beaufschlagt ist. Dadurch werden Bremsbeläge, die in Figur 1 nicht sichtbar und daher auch nicht eingezeichnet sind, seitlich gegen das zu bremsende Rad 5 gedrückt. Die dadurch wirkende Bremskraft wird im Radaufstandspunkt auf die Schiene 6 übertragen, was durch eine Pfeil angedeutet ist. Das Rad ist einem Drehgestell 9 montiert.

Erfindungsgemäß ist zwischen der Backe 4 und dem Halter für den Bremsbelag der Bremskraftgeber 7 angeordnet. Dieser erfährt die Kraft, die auch die Backe 4 und damit auch auf den Belaghalter in der tangentialen Richtung des Radlaufs wirkt, die durch zwei entgegengesetzte Pfeile symbolisiert ist. Diese Kraft entspricht der auf das Rad 5 wirkenden Bremskraft. Der Bremskraftgeber 7 erzeugt einen Steuerdruck P_{S}, der über eine Leitung 8 ausgegeben wird. Weiterhin ist am Drehgestell 9 ein Achslastgeber 10 angeordnet, der einen Lastdruck P_{L} über eine weitere Druckleitung 10a ausgibt. Die Druckleitung 8 vom Bremskraftgeber 7 und die Druckleitung 10a vom Achslastgeber 10 münden in ein Lastdruckventil 12, das den Steuerdruck P_{S} nach Maßgabe des Lastdrucks P_{L} entsprechend der gesetzlich festgelegten Tabelle oder Funktionsvorschrift zu einem Rückkopplungsdruck P_{R} ändert. Der Ausgang des Lastdruckventils 12 ist mit dem Regelventil 11 verbunden und führt ihm dem Rückkopplungsdruck P_{R} zu. Das Regelventil ist in die Arbeitsleitung zwischen dem Führerbremsventil 2 und dem Druckzylinder in der Bremszange 3 eingeschleift. Unabhängig von der Höhe des durch das Führerbremsventil 2 eingesteuerten Drucks begrenzt das Regelventil 11 den an die Bremszange 3 weitergegebenen Druck dergestalt, dass der im Lastdruckventil 12 aus dem Steuerdruck P_{S} und dem Lastdruck P_{L} gebildete Rückkopplungsdruck P_{R} einen vorgegebenen Grenzwert nicht überschreitet. Damit ist sichergestellt, dass der maximal zulässige Kraftschluss am Radaufstandspunkt eingehalten wird. Der Druck P_{R} wird zusätzlich über einen Sensor 13 in ein elektrisches Signal umgewandelt, das einer Fahrdynamikregelung und weiteren Einrichtungen im Schienenfahrzeug zugeführt werden kann. Die Druckbegrenzung durch das Regelventil 11 kann für einen einzelnen Bremskrafterzeuger 3, aber auch für eine Gruppe derartiger Bremskrafterzeuger erfolgen.

Die hier dargestellte mechanische Überwachung der Kraftschlussgrenze bewirkt speziell, dass mechanische Toleranzen im Bremssystem und auch Schwankungen im Wirkungsgrad der Bremszange 3 nicht mehr bei der Auslegung des Bremssystems berücksichtigt werden müssen. Sie werden durch das Regelventil 11 bei jeder Bremsung aufs Neue automatisch berücksichtigt.

### Bezugszeichenliste

- 1: Druckmittelquelle
- 1a: Kompressor
- 1b: Rückschlagventil
- 1c: Vorratsluftbehälter
- 2: Führerbremsventil
- 3: Bremsaktor, Bremszange
- 4: Bremsbacken
- 5: Rad
- 6: Schiene
- 7: Bremskraftgeber
- 8: Leitung für Steuerdruck P_{S}
- 9: Drehgestell
- 10: Achslastgeber
- 10a: Leitung für Lastdruck P_{L}
- 11: Regelventil
- 12: Lastdruckventil
- 13: Sensor
- P_{S}: Steuerdruck
- P_{L}: Lastdruck
- P_{R}: Rückkopplungsdruck

## Patentansprüche

1. Bremssystem für ein Schienenfahrzeug, umfassend eine pneumatische oder hydraulische Druckmittelquelle (1) und einen Bremsaktor (3) zur Umwandlung eines eingesteuerten Drucks in eine auf mindestens ein Rad (5) ausgeübte Bremskraft, wobei ein Bremskraftgeber (7) vorgesehen ist, der bei Ausübung der Bremskraft die korrespondierende Tangentialkraft erfährt, wobei der Bremskraftgeber (7) durch die Wirkung dieser Tangentialkraft eine Steuerkraft, einen Steuerweg oder einen pneumatischen oder hydraulischen Steuerdruck (P_{S}) erzeugt, und dass in die Arbeitsleitung zwischen der Druckmittelquelle (1) und dem Bremsaktor (3) ein Regelventil (11) geschaltet ist, wobei das Regelventil (11) mit der Steuerkraft oder dem Steuerdruck (P_{S}), oder mit einer hieraus abgeleiteten Rückkopplungskraft bzw. mit einem hieraus abgeleiteten Rückkopplungsdruck (P_{R}), beaufschlagt ist und die Druckbeaufschlagung des Bremsaktors (3) dahingehend ändert, dass die Steuerkraft bzw. der Steuerdruck (P_{S}), oder die Rückkopplungskraft bzw. der Rückkopplungsdruck (P_{R}), unter einem festgelegten Grenzwert gehalten wird, **dadurch gekennzeichnet, dass** ein Achslastgeber (10) vorgesehen ist, der die aktuelle Achslast an der Achse, auf die das Bremssystem wirkt, in eine Lastkraft oder einen pneumatischen oder hydraulischen Lastdruck (P_{L}) umwandelt und dass ein Lastdruckventil (12) vorgesehen ist, das zwischen den Bremskraftgeber (7) und das Regelventil (11) geschaltet ist oder direkt auf das Regelventil (11) wirkt, so dass es die Steuerkraft bzw. den Steuerdruck (P_{S}) nach Maßgabe der Lastkraft bzw. des Lastdrucks (P_{L}) zu einer Rückkopplungskraft bzw. einem Rückkopplungsdruck (P_{R}) ändert, mit dem das Regelventil (11) beaufschlagt ist.

2. Bremssystem nach Anspruch 1, **dadurch gekennzeichnet, dass** zusätzlich mindestens ein Sensor (13) zur Umwandlung der Bremskraft oder der Achslast in ein elektrisches Signal vorgesehen ist.

3. Bremssystem nach Anspruch 2, **dadurch gekennzeichnet, dass** der Sensor (13) den Steuerdruck (P_{S}) oder die Steuerkraft in ein elektrisches Signal für die Bremskraft umwandelt und/oder dass er den Lastdruck (P_{L}) oder die Lastkraft in ein elektrisches Signal für die Achslast umwandelt.

4. Bremssystem nach einem der Ansprüche 1 bis 3, **dadurch gekennzeichnet, dass** mindestens ein Bremskraftgeber (7) die Kraft erfährt, die auf den Träger für den Bremsbelag in tangentialer Richtung des Radlaufs wirkt.

5. Bremssystem nach einem der Ansprüche 1 bis 4 **dadurch gekennzeichnet, dass** mindestens ein Bremskraftgeber (7) die Anpresskraft des Bremsbelags gegen das gebremste Rad (5) erfährt.

## Claims

1. A brake system for a rail vehicle comprising a pneumatic or hydraulic pressure medium source (1) and a brake actuator (3) for converting a supplied pressure into a braking force exerted on at least one wheel (5), there being provided a braking-force generator (7) which experiences the corresponding tangential force when the braking force is exerted, the braking-force generator (7) generating a control force, a control path or a pneumatic or hydraulic control pressure (P_{S}) through the effect of this tangential force, and there being integrated into the working line between the pressure medium source (1) and the brake actuator (3) a control valve (11), the control force or the control pressure (P_{S}) or a feedback force derived therefrom or a feedback pressure (P_{R}) derived therefrom being applied to the control valve (11) and changing the pressure applied to the brake actuator (3) such that the control force or the control pressure (P_{S}) or the feedback force or the feedback pressure (P_{R}) is maintained below a set limit value,
**characterised in that** there is provided an axle-load sensor (10), which converts the axle load on the axle on which the brake system acts at any given time into a load force or a pneumatic or hydraulic load pressure (P_{L}), and that there is provided a load-pressure valve (12) which is integrated between the braking-force generator (7) and the control valve (11) or acts directly on the control valve (11) such that said control valve (11) changes the control force or the control pressure (P_{S}), according to the load force or the load pressure (P_{L}), to a feedback force or a feedback pressure (P_{R}), which is applied to the control valve (11).

2. A brake system according to claim 1, **characterised in that** there is also provided at least one sensor (13) for converting the braking force or the axle load into an electrical signal.

3. A brake system according to claim 2, **characterised in that** the sensor (13) converts the control pressure (P_{S}) or control force into an electrical signal for the braking force and/or that it converts the load pressure (P_{L}) or the load force into an electrical signal for the axle load.

4. A brake system according to any of claims 1 to 3, **characterised in that** at least one braking-force generator (7) experiences the force that acts on the carrier for the brake pad tangentially in relation to the wheel arch.

5. A brake system according to any of claims 1 to 4, **characterised in that** at least one braking-force generator (7) experiences the clamping force of the brake pad against the braked wheel (5).

## Revendications

1. Système de frein d'un véhicule ferroviaire, comprenant une source (1) pneumatique ou hydraulique de fluide sous pression et un actionneur (3) de frein pour transformer une pression de commande en une force de freinage appliquée à au moins une roue (5), dans lequel il est prévu un indicateur (7) de force de freinage, qui, lors de l'application de la force de freinage, subit la force tangentielle correspondante, l'indicateur (7) de force de freinage produisant, par l'effet de cette force tangentielle, une force de commande, un trajet de commande ou une pression (P_{S}) de commande pneumatique ou hydraulique, et en ce qu'une soupape (11) de réglage est montée dans la ligne de travail entre la source (1) de fluide sous pression et l'actionneur (3) de frein, la soupape (11) de réglage étant soumise à la force de commande ou à la pression (P_{S}) de commande ou à une force de réaction qui s'en déduit ou à une pression (P_{R}) de réaction qui s'en déduit et l'alimentation en pression de l'actionneur (3) de frein s'en modifiant, en ce que la force de commande ou la pression (P_{S}) de commande ou la force de réaction ou la pression (P_{R}) de réaction sont maintenues en dessous d'une valeur limite fixée, **caractérisé en ce qu'**il est prévu un indicateur (10) de charge d'essieu, qui transforme la charge d'essieu instantanée sur l'essieu, sur lequel agit le système de frein, en une force de charge ou en une pression (P_{L}) de charge pneumatique ou hydraulique et **en ce qu'**il est prévu une soupape (12) de pression de charge, qui est montée entre l'indicateur (7) de force de freinage et la soupape (11) de réglage ou qui agit directement sur la soupape (11) de réglage, de manière à transformer la force de commande ou la pression (P_{S}) de commande en proportion de la force de charge ou de la pression (P_{L}) de charge en une force de réaction ou en une pression (P_{R}) de réaction, à laquelle la soupape (11) de réglage est soumise.

2. Système de frein suivant la revendication 1, **caractérisé en ce qu'**il est prévu en outre au moins un capteur (13) de transformation de la force de freinage ou de la charge d'essieu en un signal électrique.

3. Système de frein suivant la revendication 2, **caractérisé en ce que** le capteur (13) transforme la pression (P_{S}) de commande ou la force de commande en un signal électrique de la force de freinage et/ou **en ce qu'**il transforme la pression (P_{L}) de charge ou la force de charge en un signal électrique de la charge d'essieu.

4. Système de frein suivant l'une des revendications 1 à 3, **caractérisé en ce qu'**au moins un indicateur (7) de force de freinage subit la force qui agit sur le support de la garniture de frein dans la direction tangentielle du passage de roue.

5. Système de frein suivant l'une des revendications 1 à 4, **caractérisé en ce qu'**au moins un indicateur (7) de force de freinage subit la force de pression de la garniture de frein sur la roue (5) freinée.
